# EUROPÄISCHE PATENTSCHRIFT

(11) **EP 0 361 325 B1**
(45) Veröffentlichungstag und Bekanntmachung des Hinweises auf die Patenterteilung: **28.12.1994**
(21) Anmeldenummer: 89117537.4
(22) Anmeldetag: 22.09.1989
(51) Int. Cl.: C07F 7/18

(54) **Verfahren zur Stabilisierung von Methacryloxy- oder Acryloxygruppen enthaltenden Organosilanen**
Method for stabilizing methacryloxy- or acryloxy-organosilanes
Méthode pour la stabilisation de méthacryloxy- ou acryloxy-organosilanes

(30) Priorität: 26.09.1988 DE 3832621
(43) Veröffentlichungstag der Anmeldung: 04.04.1990
(73) Patentinhaber: HÜLS AKTIENGESELLSCHAFT, 45764 Marl (DE)
(72) Erfinder: Bernhardt, Günther, Dr., D-5205 Sankt Augustin 2 (DE); Amort, Jürgen, Dr., D-5210 Troisdorf 15 (DE); Kragl, Heinz, D-5210 Troisdorf 15 (DE); Haas, Margret, D-5000 Köln 60 (DE)

(56) Entgegenhaltungen:
- EP-A- 0 247 501
- US-A- 4 754 046
- CHEMICAL ABSTRACTS, Band 110, 1989, Seite 10, Zusammenfassung Nr. 24461s,Columbus, Ohio, US; & SU-A-1 409 634 (INSTITUTE OF CHEMICAL PHYSICS,ACADEMY OF SCIENCES, USSSR) 15-07-1988

## Beschreibung

Gegenstand der vorliegenden Erfindung ist ein Verfahren zur Stabilisierung von Methacryloxy- oder Acryloxygruppen enthaltenden Organosilanen der allgemeinen Formel I 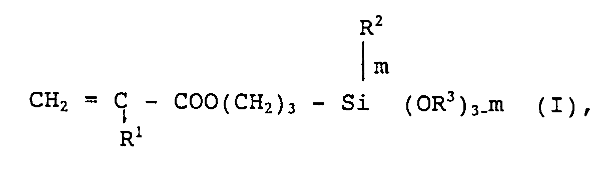
in der R¹ für ein Wasserstoffatom oder eine Methylgruppe, R² und R³ für gleiche oder verschiedene Alkylreste mit 1 bis 4 C-Atomen und m für 0 oder 1 oder 2 stehen. Diese Silane werden im Folgenden auch als Acrylsilane bezeichnet.

Zur Herstellung von Acrylsilanen sind verschiedene Verfahren bekannt. So können Acrylsilane durch Addition von Trialkoxysilanen an Allylacrylat oder -methacrylat in Gegenwart platinhaltiger Katalysatoren hergestellt werden (US-PS 3 258 477). Hierbei werden verunreinigte und verfärbte Rohprodukte erhalten, die als solche technisch nicht einsatzfähig sind. Vor allem Acrylsilane, die zur Herstellung von Polymerisaten verwendet werden sollen, erfordern einen hohen Reinheitsgrad und farbloses Aussehen.

Zur Abtrennung der Acrylsilane aus den Rohmischungen findet ausschließlich das Verfahren der Destillation, vorzugsweise unter vermindertem Druck, Anwendung. Um Polymerisation oder Gelbildung während der Destillation zu vermeiden, sind eine Reihe von Stabilisatoren vorgeschlagen worden, wie z.B. p-Benzochinon, Hydrochinon, p-Methoxyphenol oder 2,5-Di-tert.-butylhydrochinon (DE-PS 11 83 503, DE-OS 22 38 295). Wenn Acrylsilane jedoch destilliert werden sollen, ist der Stabilisatoreffekt der bekannten Stabilisatoren entweder nicht ausreichend oder vom Stabilisator geht eine Verfärbung des Destillats aus.

Als weitere Stabilisatoren sind N,N'-disubstituierte p-Phenylendiamine, wie z.B. N,N'-Diphenyl-p-phenylendiamin, oder sterisch gehinderte Phenole vorgeschlagen worden. Auch sie erfüllen die Anforderungen, die an einen guten Stabilisator gestellt werden, nicht. So wird durch die Verwendung von substituierten p-Phenylendiaminen die Polymerisation im Sumpf weitgehend unterdrückt, aber in der Dampfphase kommt es während der Destillation zur Ausbildung von "Popcorn"-Polymerisat, das zu Verstopfungen in Destillationskolonnen, Rohrsystemen oder im Kühlsystem führen und Anlaß zu erheblichen Betriebsstörungen geben kann.

Durch Verwendung von substituierten oder sterisch gehinderten Phenolen wird die Ausbildung von "Popcorn"-Strukturen vermindert, dafür ist die Polymerisatbildung im Sumpf erheblich, wenn nicht sehr große Mengen an Phenolen verwendet werden. Da diese Phenole aber mit den Acrylsilanen während der Destillation übergehen, ist ihr Anteil im Destillat entsprechend hoch, was bei der Verwendung dieser Acrylsilane zur Herstellung von Polymerisaten erhebliche Schwierigkeiten bereitet, weil die Phenole die Polymerisation stark inhibieren oder gänzlich verhindern.

In der EP-PS 0 247 501 wird die Herstellung von Acrylsilanen unter Zusatz phenolischer Stabilisatoren, aromatischer Amine oder Kombinationen davon beschrieben. Bei diesem Verfahren besteht jedoch ebenfalls die Gefahr einer Gelbildung.

Es bestand daher die Aufgabe, Stabilisatoren für Acrylsilane zu finden, die während der Destillation gleichermaßen eine Polymerisation in der Sumpfphase und in der Dampfphase verhindern und zudem keine Verfärbungen des Destillates verursachen.

In Erfüllung dieser Aufgabe wurde nun ein Verfahren zur Stabilisierung von Acrylsilanen gefunden, welches dadurch gekennzeichnet ist, daß man als Stabilisatoren ein Gemisch aus N,N'-Diphenyl-p-phenylendiamin und 2,6-Di-tert.-butyl-4-methylphenol verwendet.

Die erfindungsgemäß beanspruchte Stabilisatorkombination kann bereits während der Herstellung der Acrylsilane anwesend sein oder erst unmittelbar vor oder im Verlaufe der Destillation der Acrylsilane zugefügt werden.

Es ist aber durchaus möglich, daß keiner oder wahlweise nur ein Bestandteil der erfindungsgemäßen Kombination während der Herstellung der Acrylsilane anwesend ist und die erfindungsgemäße Stabilisatorkombination erst zu Beginn oder im Verlauf der Destillation zugesetzt oder komplettiert wird.

Vorzugsweise wird N,N'-Diphenyl-p-phenylendiamin in Mengen von 0,01 bis 5 Gew.-%, 2,6-Di-tert.-butyl-4-methylphenol in Mengen vom 0,001 bis 1 Gew.-%, bezogen auf das Acrylsilan, verwendet.

Die Anwesenheit von Sauerstoff, z.B. in Form von Luft, während der Destillation kann vorteilhaft sein.

Die Gegenwart von Hilfsmitteln, die während der Herstellung der Acrylsilane erforderlich sind, wie z.B. Katalysatoren oder Lösungsmittel, beeinträchtigt die Wirkung der Stabilisatoren nicht, sofern diese nicht chemisch durch die Hilfsmittel verändert werden.

Durch Verwendung der erfindungsgemäßen Stabilisatorkombination können die bekannten Mängel bei der Destillation von Acrylsilanen beseitigt werden. Es wird sowohl die Ausbildung von "Popcorn"-Polymerisat in der Dampfphase unterbunden als auch die Bildung von Polymerisat in der Sumpfphase niedrig gehalten. Die Destillate sind unverfärbt und genügen den hohen Ansprüchen der Lackindustrie. Man erreicht also höhere Ausbeuten als bei den bekannten Verfahren und erhält Produkte hoher Reinheit.

### Beispiel 1

Eine Mischung aus 189,0 g (1,5 Mol) Allylmethacrylat, 0,6 ml einer 10 Gew.-%igen Lösung von H₂PtCl₆ in Aceton, 0,1 g 2,6-Di-tert.-butyl-4-methylphenol und 1,2 g N,N'-Diphenyl-p-phenylendiamin wird unter Rühren auf 60 °C erhitzt und mit 189,1 g (1,55 Mol) Trimethoxysilan innerhalb von 30 Minuten versetzt, wobei unter Kühlung die Temperatur zwischen 70 und 80 °C gehalten wird. Die niedrigsiedenden Bestandteile werden anschließend herausdestilliert, zum Schluß unter Anlegen von schwachem Vakuum. Der verbleibende Rückstand wird unter reduziertem Druck über eine kurze Füllkörperkolonne destilliert, wobei als Hauptfraktion bei 78 bis 79 °C (0,3 mbar) 302,1 g 3-Methacryloxypropyltrimethoxysilan übergehen, was einer Ausbeute von 81,2 %, bezogen auf eingesetztes Allylmethacrylat, entspricht. In der Kolonne befindet sich kein "Popcorn"-Polymerisat, der Destillationsrückstand ist dünnflüssig, und das Destillat weist eine Hazenzahl von weniger als 10 auf.

### Vergleichsbeispiel A

Beispiel 1 wird mit der Abänderung wiederholt, daß kein 2,6-Di-tert.-butyl-4-methylphenol zugesetzt wird. Im Verlauf der Destillation bildet sich in der Füllkörperkolonne in erheblicher Menge "Popcorn"-Polymerisat, das zur Verstopfung führt. Der Destillationsrückstand ist geliert.

### Vergleichsbeispiel B

Beispiel 1 wird mit der Abänderung wiederholt, daß kein N,N'-Diphenyl-p-phenylendiamin verwendet wird. Im Verlauf der Destillation tritt Polymerisation im Sumpf ein. Mehr als die Hälfte des eingesetzten Produktes ist gallertartig erstarrt und nur schwer aus dem Destillationskolben zu entfernen.

## Patentansprüche

1. Verfahren zur Stabilisierung von Methacryloxy- oder Acryloxygruppen enthaltenden Organosilanen der allgemeinen Formel I 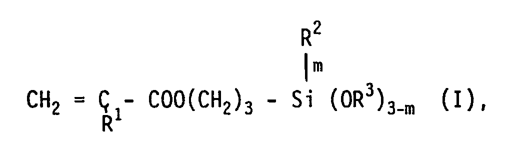 in der R¹ für ein Wasserstoffatom oder eine Methylgruppe, R² und R³ für gleiche oder verschiedene Alkylreste mit 1 bis 4 C-Atomen und m für 0 oder 1 oder 2 stehen, **dadurch gekennzeichnet,** daß man als Stabilisatoren ein Gemisch aus N,N'-Diphenyl-p-phenylendiamin und 2,6-Di-tert.-butyl-4-methylphenol verwendet.

2. Verfahren nach Anspruch 1, dadurch gekennzeichnet, daß der Anteil des N,N'-Diphenyl-p-phenylendiamins 0,01 bis 5 Gew.-% und der Anteil des 2,6-Di-tert.-butyl-4-methylphenols 0,001 bis 1 Gew.-%, bezogen auf das Organosilan, beträgt.

## Claims

1. Process for the stabilisation of methacryloxy- or acryloxy group- containing organosilanes of the general formula I 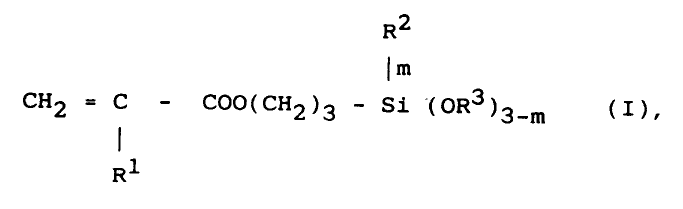 in which R¹ stands for a hydrogen atom or a methyl group, R² and R³ stand for the same or different alkyl residues with 1 to 4 C-atoms and m stands for 0 or 1 or 2, **characterised in that** there is used as stabilisers a mixture of N,N'-diphenyl-p-phenylenediamine and 2,6-di-tert.-butyl-4-methylphenol.

2. Process according to claim 1, **characterised in that** the quantity of N,N'-diphenyl-p-phenylenediamine amounts to 0.01 to 5 % by weight and the quantity of the 2,6-di-tert.-butyl-4-methylphenol amounts to 0.001 to 1 % by weight, related to the organosilane.

## Revendications

1. Procédé de stabilisation d'organosilanes comportant des groupes acryloxy ou méthacryloxy, de formule générale (I)
CH₂=C(R¹)-COO(CH₂)₃-Si(R²)ₘ(OR³)₃₋ₘ (I)
dans laquelle R¹ représente un atome d'hydrogène ou un groupe méthyle, R² et R³ représentent des groupes alkyle identiques ou différents, comportant de 1 à 4 atomes de carbone, et m représente un nombre valant 0, 1 ou 2,
caractérisé en ce que l'on utilise, comme agent de stabilisation, un melange de N,N'-diphényl-para-phénylènediamine et de 2,6-di-t-butyl-4-méthylphénol.

2. Procédé conforme à la revendication 1, caractérisé en ce que la proportion de N,N'-diphényl-para-phénylènediamine vaut de 0,01 à 5 % en poids et la proportion de 2,6-di-t-butyl-4-méthylphénol vaut de 0,001 à 1 % en poids, par rapport à l'organosilane.
